(19) Europäisches Patentamt
European Patent Office
Office européen des brevets

(11) **EP 3 647 297 B1**

(12) **EUROPEAN PATENT SPECIFICATION**

(45) Date of publication and mention
of the grant of the patent:
**17.04.2024 Bulletin 2024/16**

(21) Application number: **18823213.6**

(22) Date of filing: **22.06.2018**

(51) International Patent Classification (IPC):
**C04B 35/488** *(2006.01)*     **C04B 35/626** *(2006.01)*
**C04B 35/634** *(2006.01)*     **C04B 35/638** *(2006.01)*
**C04B 35/64** *(2006.01)*

(52) Cooperative Patent Classification (CPC):
**C04B 35/4885; C04B 35/488; C04B 35/62695;**
**C04B 35/63416; C04B 35/638; C04B 35/64;**
C04B 2235/3217; C04B 2235/3222;
C04B 2235/3225; C04B 2235/3246;
C04B 2235/3262; C04B 2235/3275;
C04B 2235/5436; C04B 2235/5445;
C04B 2235/6022;                                   (Cont.)

(86) International application number:
**PCT/JP2018/023860**

(87) International publication number:
**WO 2019/004090 (03.01.2019 Gazette 2019/01)**

(54) **COLORED CERAMIC**

FARBIGE KERAMIK

CÉRAMIQUE COLORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2017 JP 2017127608**

(43) Date of publication of application:
**06.05.2020 Bulletin 2020/19**

(73) Proprietor: **KYOCERA Corporation**
**Kyoto 612-8501 (JP)**

(72) Inventor: **TANI, Yoshito**
**Kyoto-shi**
**Kyoto 612-8501 (JP)**

(74) Representative: **Viering, Jentschura & Partner
mbB**
**Patent- und Rechtsanwälte**
**Am Brauhaus 8**
**01099 Dresden (DE)**

(56) References cited:
| **EP-A1- 2 746 242** | **WO-A1-2010/024275** |
| **JP-A- H0 238 363** | **JP-A- H04 114 964** |
| **JP-A- H04 114 964** | **JP-A- S59 174 574** |
| **JP-A- 2013 126 933** | **JP-A- 2016 216 289** |
| **JP-A- 2016 216 289** | |

(52) Cooperative Patent Classification (CPC): (Cont.)
C04B 2235/6027; C04B 2235/6567; C04B 2235/76;
C04B 2235/762; C04B 2235/763; C04B 2235/765;
C04B 2235/785; C04B 2235/786; C04B 2235/80;
C04B 2235/9661

**Description**

Field

The present disclosure relates to a color ceramic. Background

A zirconia ceramic has a high mechanical characteristic, provides a premium feel, and is to feel an aesthetic satisfaction. Hence, it is widely used as a bezel of a watch, a key of a mobile phone, or a decorative component such as a pillow in various fields in recent years. Then, a variety of investigations of a coloring component are executed so as to provide various color tones in response to diversification of a taste.

Then, the applicant(s) of the present application has/have proposed a colored zirconia ceramic that contains a dye source that is composed of $CoO-Al_2O_3$ with a light blue color (see Patent Literature 1). In JP2016-216289 A, blue zirconia sintered bodies comprising a complex oxide of cobalt and aluminium are described. The sintered zirconia bodies further comprise at least one of iron, nickel and manganese.

Citation List

Patent Literature

Patent Literature 1: Japanese Patent Application Publication No. H02-38363

Summary

In a color ceramic according to the present invention, as defined in claim 1, a content of zirconia that includes a stabilizer is 80% by mass or greater. Then, a zirconia crystal and a solid solution crystal where manganese is incorporated into a cobalt aluminate crystal to provide a solid solution are contained therein, and no grain of manganese oxide is contained therein.

Description of Embodiments

A taste of a color tone is of great variety and a zirconia ceramic with a dark blue color is desired in recent years. Herein, it is known that a grain that is composed of manganese oxide that causes an effect of color darkening is present separately from cobalt aluminate with a light blue color (for example, $CoO-Al_2O_3$), so that it is possible to realize a dark blue color that is provided thereto. However, manganese oxide has a hardness that is less than those of zirconia and cobalt aluminate, so that, in a process for providing a zirconia ceramic that contains a grain that is composed of manganese oxide as a decorative component, grain detachment of a grain as described above is readily caused. Then, grain detachment of a crystal around a place where grain detachment is caused is caused, so that a large dent (that will be described as a pinhole below) is readily generated. Herein, a processed product with a pinhole that is generated thereon is a defective product. Furthermore, a zirconia ceramic that contains a grain that is composed of a manganese oxide has a possibility of grain detachment at a time when colliding with or contacting another object at a time of wearing thereof, even if a pinhole is not generated by processing thereof. Hence, a zirconia ceramic that is capable of presenting a color tone of a dark blue color and providing a high aesthetic satisfaction over a long period of time is desired recently.

It is possible for a color ceramic according to the present disclosure to present a color tone of a dark blue color and provide a high aesthetic satisfaction over a long period of time. Hereinafter, a color ceramic according to the present disclosure will be explained in detail.

In a color ceramic according to the present disclosure, a content of zirconia that includes a stabilizer is 80% by mass or greater, and a zirconia crystal and a solid solution crystal where manganese is incorporated into a cobalt aluminate crystal to provide a solid solution are contained therein.

A color ceramic according to the present disclosure satisfies a configuration as described above, so that a grain that is composed of manganese oxide that readily causes grain detachment thereof is not present but instead a cobalt aluminate crystal where manganese is incorporated therein to provide a solid solution is present so as to present a color tone of a dark blue color. Then, a cobalt aluminate crystal is difficult to cause grain detachment thereof, so that a pinhole is difficult to generate at a time of processing thereof. Hence, in a color ceramic according to the present disclosure, a pinhole is difficult to generate by processing thereof and a possibility of grain detachment is low in use thereof, so that it is possible to withstand use thereof over a long period of time. Thus, it is possible for a color ceramic according to the present disclosure to present a color tone of a dark blue color and provide a high aesthetic satisfaction over a long period of time.

Herein, a dark blue color is a color tone where, in CIE 1976 L*a*b* color space, a lightness index L* is 5 or greater and 25 or less, a chromaticness index a* is -20 or greater and 10 or less, and a chromaticness index b* is -40 or greater and -5 or less.

Furthermore, a stabilizer is to keep zirconia in a stable phase state (a tetragonal crystal or a cubic crystal) and is, for example, at least one kind that is selected from yttrium oxide ($Y_2O_3$), cerium oxide ($CeO_2$), dysprosium oxide ($Dy_2O_3$), magnesium oxide (MgO), calcium oxide (CaO), and the like. In particular, if a stabilizer is yttrium oxide, an ionic radius thereof is close to that of zirconia, so that a degree of stabilization is high, a coarse crystal of zirconia is difficult to generate, and hence, it is possible to provide a color ceramic with an excellent mechanical characteristic.

Next, a variety of measurement methods and confirmation methods will be explained.

First, a semi-quantitative analysis of a color ceramic is first executed by using an X-ray fluorescence spectrometer (XRF) so as to obtain a content of zirconium (Zr) and such zirconium is converted into zirconia ($ZrO_2$), so that a content of zirconia that includes a stabilizer is calculated.

Then, a semi-quantitative analysis of a color ceramic is executed by using an XRF similarly to zirconia, and if, for example, yttrium (Y) is detected, a content of yttrium is converted into that of yttrium oxide, so that a content of a stabilizer is sufficiently calculated. Then, contents of zirconia and a stabilizer that are calculated by a method as described above are added together, so that it is possible to calculate a content of zirconia that includes a stabilizer.

Furthermore, it is sufficient to confirm whether or not a zirconia crystal is present by executing a measurement in an X-ray diffractometer (XRD) and executing a check against JCPDS data.

Furthermore, for confirmation of whether or not a solid solution crystal where manganese is incorporated into a cobalt aluminate crystal to provide a solid solution is present, it is sufficient to execute a following method. First, a measurement is executed by an XRD and executing a check against JCPDS data is executed, so that presence of a cobalt aluminate crystal is confirmed. Then, after a color ceramic is cut and a cut cross section thereof is mirror-polished, a heat treatment thereof is executed at 1360 to 1410 °C for 10 to 20 minutes and surface analysis is executed by an electron-beam microanalyzer (EPMA) while a heat-treated surface is provided as a measuring surface. Then, it is possible to confirm whether or not a solid solution crystal is present by presence or absence of detection of manganese in a region where aluminum, cobalt, and oxygen overlap that indicates a location of presence of a cobalt aluminate crystal, in an obtained color mapping. Furthermore, for another confirmation method, a method of executing energy dispersive X-ray analysis (EDS) for a cobalt aluminate crystal on a measuring surface to confirm whether manganese is detected in such a cobalt aluminate crystal is also provided.

Furthermore, for a color tone of a color ceramic, it is sufficient to obtain a value of a lightness index L* and values of chromaticness indices a* and b* in CIE 1976 L*a*b* color space by using a color or color-difference meter (CM-700d produced by Konica Minolta, Inc. or a succession model thereof) in conformity with JIS Z 8722-2000. Additionally, for a measurement condition, it is sufficient to provide CIE standard light source D65 as a light source and condition a ((45-n) [45-0]) as an illumination light receiving method and set a measurement diameter at 3 mm.

Furthermore, for a solid solution crystal in a color ceramic according to the present disclosure, a surface area occupancy on a cross section thereof may be 1.5% by surface area or greater and 7.5% by surface area or less. If such a configuration is satisfied, a pinhole is difficult to generate by processing and a possibility of grain detachment is low in use, as well as it is possible to present a color tone of a dark blue color with depth and provide a higher aesthetic satisfaction.

Herein, a dark blue color with depth is a color tone where, in CIE 1976 L*a*b* color space, a lightness index L* is 7 or greater and 22 or less, a chromaticness index a* is -13 or greater and 0 or less, and a chromaticness index b* is -30 or greater and -10 or less.

Furthermore, it is possible to calculate a surface area occupancy of a solid solution crystal on a cross section of a color ceramic (in other words, a surface area ratio of an occupying solid solution crystal) by a following method. First, presence of a solid solution crystal is confirmed by a method as described above. Then, it is sufficient to black out a solid solution crystal in a photograph of a measuring surface as described above that is image-captured by an SEM, read it as image data, and apply a technique of particle analysis of image analysis software "A zo-kun" (produced by ASAHI ENGINEERING CO., LTD., registered trademark) thereto to execute image analysis so that a surface area occupancy of such a solid solution crystal is calculated. Additionally, for an analysis condition of image analysis software "A zo-kun", it is sufficient to provide, for example, a lightness of a grain that is "dark", a method for binarization that is "manual", a small graphic elimination that is "0.1 $\mu$m", and a threshold value that is "150".

Furthermore, in a color ceramic according to the present disclosure, an average crystal grain size of a solid solution crystal may be 0.8 $\mu$m or less. If such a configuration is satisfied, a solid solution crystal has a size that is more difficult to cause grain detachment, so that a color ceramic according to the present disclosure is more difficult to generate a pinhole by processing thereof and a possibility of grain detachment is further reduced in use thereof.

Herein, it is sufficient to calculate an average crystal grain size of a solid solution crystal by using a technique of particle analysis of image analysis software "A zo-kun", similarly to a case where a surface area occupancy of a solid solution crystal is obtained.

Furthermore, in a color ceramic according to the present disclosure, a maximum value of a crystal grain size of a solid solution crystal may be 1.2 $\mu$m or less. If such a configuration is satisfied, a solid solution crystal with a size that readily causes grain detachment is reduced, so that a color ceramic according to the present disclosure is more difficult to generate a pinhole by processing thereof and a possibility of grain detachment is further reduced in use thereof.

Herein, it is sufficient to calculate a maximum value of a crystal grain size of a solid solution crystal by using a technique of particle analysis of image analysis software "A zo-kun", similarly to a case where a surface area occupancy of a solid solution crystal is obtained.

Furthermore, in a color ceramic according to the present disclosure, an average value of a distance between centers of gravity of adjacent solid solution crystals may be 1.5 μm or greater and 4 μm or less. Herein, an average value of a distance between centers of gravity is an average value of a shortest distance between both centers of gravity of adjacent solid solution crystals. Hence, if such a configuration is satisfied, solid solution crystals are dispersed, so that a color variation of a color ceramic according to the present disclosure is suppressed and it is possible to provide a high aesthetic satisfaction to a consumer.

Additionally, for a color variation, it is sufficient to execute measurement of a value of a lightness index L* and values of chromaticness indices a* and b* in CIE 1976 L*a*b* color space at a plurality of locations on a cross section of a color ceramic, subtract minimum values of L*, a*, and b* from maximum values of obtained L*, a*, and b*, respectively, so as to calculate ΔL, Δa, and Δb, and obtain a color variation ΔE by $\Delta E = ((\Delta L^*)^2 + (\Delta a^*)^2 + (\Delta b^*)^2)^{1/2}$.

Furthermore, it is sufficient to calculate an average value of a distance between centers of gravity of adjacent solid solution crystals by using a technique of a distance-between-centers-of-gravity-method of image analysis software "A zo-kun", similarly to a case where a surface area occupancy of a solid solution crystal is obtained.

Furthermore, in a color ceramic according to the present disclosure, a standard deviation of a distance between centers of gravity of adjacent solid solution crystals may be 1.5 μm or less. Herein, a standard deviation of a distance between centers of gravity is an index that indicates a degree of dispersion among solid solution crystals. Hence, if such a configuration is satisfied, solid solution crystals are further dispersed, so that a color variation of a color ceramic according to the present disclosure is further suppressed and it is possible to provide a high aesthetic satisfaction to a consumer.

Additionally, it is sufficient to calculate a standard deviation of a distance between centers of gravity of adjacent solid solution crystals by using a technique of a distance-between-centers-of-gravity method of image analysis software "A zo-kun", similarly to a case where a surface area occupancy of a solid solution crystal is obtained.

Furthermore, in a color ceramic according to the present disclosure, a rate of a monoclinic crystal of a zirconia crystal on a surface thereof may be greater than a rate of a monoclinic crystal of a zirconia crystal in an interior thereof. Herein, an interior is a part at a depth of 1.0 mm or greater from a surface of a color ceramic according to the present disclosure. Additionally, a rate of a monoclinic crystal of a zirconia crystal is provided with respect to a total of a tetragonal crystal, a cubic crystal, and a monoclinic crystal of a zirconia crystal.

Then, if such a configuration is satisfied, it is possible to apply a compressive stress that is caused by a monoclinic crystal that is present on a surface, effectively, and a crack is difficult to generate on a surface of a color ceramic by such a compressive stress. Hence, a mechanical strength of a color ceramic according to the present disclosure is improved, so that brakeage is difficult to cause even if it is used over a long period of time, and hence, it is possible to provide a high aesthetic satisfaction over a long period of time.

Furthermore, in a color ceramic according to the present disclosure, a rate of a monoclinic crystal of a zirconia crystal on a surface thereof may be 3 or more times and 10 or less times greater than a rate of a monoclinic crystal of a zirconia crystal in an interior thereof. If such a configuration is satisfied, it is possible to apply a compressive stress that is caused by a monoclinic crystal that is present on a surface, more effectively, and a mechanical strength of a color ceramic according to the present disclosure is further improved.

Additionally, a rate of a monoclinic crystal of a zirconia crystal on a surface of a color ceramic according to the present disclosure may be, for example, 0.3% or greater and 30% or less. On the other hand, a rate of a monoclinic crystal of a zirconia crystal in an interior of a color ceramic according to the present disclosure may be, for example, 0.1% or greater and 3.0% or less.

Herein, measurement of each of a surface and an interior of a color ceramic is executed by an XRD, so that it is possible to obtain rates of a monoclinic crystal of a zirconia crystal on a surface and in an interior thereof from obtained X-ray diffraction intensities according to a following calculation formula.

```
        A rate of a monoclinic crystal (%) = (Im1 + Im2)

    / (Im1 + Im2 + It + Ic)
```

It: an X-ray diffraction intensity of a (1 1 1) plane of a tetragonal crystal
Ic: an X-ray diffraction intensity of a (1 1 1) plane of a cubic crystal
Im1: an X-ray diffraction intensity of a (1 1 1) plane of a monoclinic crystal
Im2: an X-ray diffraction intensity of a (1 1 -1) plane of a monoclinic crystal

Furthermore, a color ceramic according to the present disclosure may contain alumina. In particular, if a content of alumina is 0.5% by mass or greater and 11% by mass or less per 100% by mass of all components that constitutes a color ceramic, it is possible to suppress grain growth of a zirconia crystal, so that it is possible to further improve a mechanical strength of a color ceramic.

Furthermore, if a 3-point flexural strength that is obtained in conformity with JIS R 1601-2008 is 900 MPa or greater and a Vickers hardness Hv that is obtained in conformity with JIS R 1610-2003 is 13 GPa or greater, damage to a color ceramic according to the present disclosure is difficult to cause even if it contacts a substance with a high hardness such as dust that is composed of a glass or a metal.

Furthermore, if an apparent density of a color ceramic according to the present disclosure is 5.7 g/cm$^3$ or greater, an open pore on a surface thereof is reduced, so that it is possible to suppress grain detachment that is caused at an outline of such an open pore. Additionally, it is sufficient to obtain an apparent density in conformity with JIS R 1634-1998.

Then, it is possible to use a color ceramic according to the present disclosure as a component for a watch such as a bezel for a watch or a band link for a watch, a component for a mobile phone such as a variety of keys to be pushed or operated, a pillow, or an exterior package, a component for guiding a fishing line such as a guide ring for a fishing line, as well as a component for an accessory such as a broach, a necklace, an earring, a ring, a tiepin, a tie tack, a medal, or a button, a component for a building material such as a tile that decorates a floor, a wall, or a ceiling, or a handle of a door, a component for a kitchen component such as a spoon or a fork, a decorative component for another household appliance, or a component for a car such as an emblem.

Next, an example of a manufacturing method for a color ceramic according to the present disclosure will be explained.

First, a stabilized zirconia powder with an average grain size of 0.25 $\mu$m or greater and 0.55 $\mu$m or less is prepared. Herein, a stabilized zirconia powder is produced by adding at least one kind of stabilizer that is selected from yttrium oxide, cerium oxide, dysprosium oxide, magnesium oxide, calcium oxide, and the like, according to a coprecipitation method, and contains 95 to 99 mol% of zirconia and 1 to 10 mol% of a stabilizer. Additionally, such a stabilized zirconia powder may contain approximately 2% by mass of hafnium oxide.

Then, an alumina powder with an average grain size of 2 $\mu$m or less, a cobalt oxide powder with an average grain size of 2 $\mu$m or less, and a manganese oxide powder with an average grain size of 3 $\mu$m or less are prepared.

Then, a stabilized zirconia powder, an alumina powder, a cobalt oxide powder, and a manganese oxide powder are weighed in such a manner that zirconia that includes a stabilizer in a color ceramic is 80% by mass or greater, so that a raw material powder is formulated. Herein, weighing is executed in such a manner that 0.5% by mass or greater and 4.0% by mass or less of an alumina powder, 0.5% by mass or greater and 1.3% by mass or less of a cobalt oxide powder, and 0.3% by mass or greater and 0.7% by mass or less of a manganese oxide powder are provided in 100% by mass of a raw material powder so that a surface area occupancy of an occupying solid solution crystal is 1.5% by surface area or greater and 7.5% by surface area or less.

Then, a raw material powder and water that is a solvent are put into a vibration mill, a ball mill, or the like, and mixing and grinding thereof are executed so as to obtain a slurry. Herein, it is sufficient to add a dispersant within a range of 0.2 parts by mass or greater and 0.5 parts by mass or less to 100 parts by mass of a raw material powder, for mixing and grinding, so that an average value of a distance between centers of gravity of adjacent solid solution crystals is 1.5 $\mu$m or greater and 4 $\mu$m or less. Moreover, it is sufficient to preliminarily grind an alumina powder, a cobalt oxide powder, and a manganese oxide powder before such mixing and grinding, where a period of time of such preliminary grinding is 40 hours or more, so that a standard deviation of a distance between centers of gravity of adjacent solid solution crystals is 1.5 $\mu$m or less.

Then, a predetermined amount of polyvinyl alcohol as a binder is added to a slurry and spraying and drying thereof is executed by using a spray drying apparatus so as to obtain a granulated granule. Then, a molded body with a desired shape such as a disc, a plate, a cylinder, or an annular body is obtained by using such a granule, according to a desired molding method, for example, a dry pressure molding method, a cold isostatic pressure molding method, or the like. Alternatively, a solvent, a binder, or the like is added to a slurry and this is molded by using a cast molding method or an injection molding method, so that a molded body with a complex shape may be obtained.

Then, after an obtained molded body is degreased as needed, holding thereof is executed at a particular temperature within a temperature range of 1000 °C or above and 1300 °C or below in air atmosphere for 2 hours or more. Thereby, it is possible to form a cobalt aluminate crystal and incorporate manganese of a manganese oxide powder into such a cobalt aluminate crystal to provide a solid solution. Then, firing thereof is executed within a temperature range of 1400 °C or above and 1600 °C or below, so that it is possible to obtain a color ceramic according to the present disclosure. Additionally, a firing temperature is adjusted, so that it is possible to provide a crystal grain size of a solid solution crystal as any size.

Furthermore, after firing, a color ceramic, together with a medium for polishing and water, is put into a barrel polishing machine and barrel polishing thereof is executed, so that it is possible to facilitate phase transformation of a zirconia crystal on a surface of a color ceramic and increase a rate of a monoclinic crystal in such a zirconia crystal and it is possible to provide a rate of a monoclinic crystal of a zirconia crystal on a surface thereof that is greater than a rate of a monoclinic crystal of a zirconia crystal in an interior thereof.

Herein, a spherical medium for polishing is used, so that it is possible to facilitate effective phase transformation of a zirconia crystal on a surface of a color ceramic and increase a rate of a monoclinic crystal in such a zirconia crystal greatly. Hence, a spherical medium for polishing is used and a period of time of barrel polishing is appropriately adjusted, so that it is possible to provide a rate of a monoclinic crystal of a zirconia crystal on a surface thereof that is 3 or more times and 10 or less times greater than a rate of a monoclinic crystal of a zirconia crystal in an interior thereof.

Hereinafter, a practical example(s) according to the present disclosure will be explained specifically, and the present disclosure is not limited to such a practical example(s).

Practical Example 1

First, a stabilized zirconia powder was prepared that had an average grain size that was 0.35 μm and contained 3 mol% of yttrium oxide that was a stabilizer. Then, an alumina powder with an average grain size of 2 μm, a cobalt oxide powder with an average grain size of 2 μm, and a manganese oxide powder with an average grain size of 2 μm were prepared.

Then, a raw material powder was fromulated by weighing the stabilized zirconia powder, the alumina powder, the cobalt oxide powder, and the manganese oxide powder in such a manner that a formulation ratio of the respective powders was provided as illustrated in Table 1.

Then, the raw material powder, water that was a solvent, and a dispersant that was 0.1 parts by mass per 100 parts by mass of the raw material powder were put into a vibration mill and mixed and grinded to obtain a slurry.

Then, a predetermined amount of polyvinyl alcohol as a binder was added to the slurry and spraying and drying thereof was executed by using a spray drying apparatus to obtain granulated granules. Then, a molded body was obtained by using such granules according to a dry pressure molding method.

Then, after degreasing of the molded body was executed, sample Nos. 1 to 3 and 5 to 7 were held at a temperature of 1200 °C in air atmosphere for 2 hours and subsequently fired at a temperature of 1580 °C for 2 hours to obtain fired bodies. On the other hand, holding of sample No. 4 at a specific temperature within a temperature range of 1000 °C or above and 1300 °C or below was not executed but firing thereof at a temperature of 1580 °C for 2 hours was executed to obtain each sample. Additionally, for each sample, 12 cylindrical tablets with a diameter of 28 mm and a thickness of 3 mm were fabricated respectively.

Then, a lapping process was executed for a surface of each sample by using a lapping machine made of tin while diamond abrasive grains were supplied thereto. Then, the number of pinholes that were present on a surface of each sample was counted. Herein, a surface of each sample was observed at 10-fold magnification by a binocular microscope, and the number of pinholes was counted where a hole with a diameter of 50 μm or greater was regarded as a pinhole. Additionally, the number of pinholes as illustrated in Table 1 is a total of the numbers of pinholes for all of 12 tablets.

Then, for each sample, confirmation was executed as to whether or not a solid solution crystal where manganese was incorporated into a cobalt aluminate crystal to provide a solid solution was present. First, after each sample was cut and a cut cross section was mirror-polished, a heat treatment was executed at 1410 °C for 10 minutes and surface analysis was executed by an EPMA while a heat-treated surface was provided as a measuring surface. Then, whether or not a solid solution crystal was present was confirmed by presence or absence of detection of manganese in a region where aluminum, cobalt, and oxygen overlap that indicated a position of presence of a cobalt aluminate crystal, in an obtained color mapping. As a result, a solid solution crystal was present for sample Nos. 1 to 3 and 5 to 7 whereas a solid solution crystal was not present for sample No. 4.

Then, for sample Nos. 1 to 3 and 5 to 7, a surface area occupancy of a solid solution crystal was calculated by a following method. First, a solid solution crystal in a photograph of the above-mentioned measuring surface that was captured by an SEM was blacked out. Then, such a photograph was read as image data and a technique of particle analysis of image analysis software "A zo-kun" was applied thereto to execute image analysis so that a surface area occupancy of a solid solution crystal was obtained. Additionally, a lightness of a grain that was "dark", a method for binarization that was "manual", a small graphic elimination that was "0.1 μm", and a threshold value that was "150" were provided as analysis conditions.

Then, a value of a lightness index L* and values of chromaticness indices a* and b* in CIE 1976 L*a*b* color space for each sample were obtained by using a color or color-difference meter (CM-700d produced by Konica Minolta, Inc.) in conformity with JIS Z 8722-2000. Additionally, for measuring conditions, CIE standard light source D65 was provided as a light source, condition a ((45-n) [45-0]) was provided as an illumination light receiving method, and a measurement diameter was set at 3 mm. Results are indicated in Table 1.

Table 1

| Sample No. | Stabilized zirconia powder (mass%) | Alumina powder (mass%) | Cobalt oxide powder (mass%) | Manganese oxide powder (mass%) | Surface area occupancy of solid solution crystal (surface area%) | Number of pinholes (number) | L* | a* | b* |
|---|---|---|---|---|---|---|---|---|---|
| 1 | 99.2 | 0.3 | 0.3 | 0.2 | 1 | 4 | 6 | -14 | -8 |
| 2 | 98.7 | 0.5 | 0.5 | 0.3 | 1.5 | 4 | 7 | -13 | -10 |
| 3 | 96.5 | 1.5 | 1.3 | 0.7 | 4 | 5 | 10.5 | -6.5 | -14.5 |
| 4 | 96.5 | 1.5 | 1.3 | 0.7 | Solid solution crystal is absent | 14 | 5 | -3 | -5 |
| 5 | 95 | 3 | 1.3 | 0.7 | 6 | 7 | 15 | -3 | -21 |
| 6 | 94 | 4 | 1.3 | 0.7 | 7.5 | 9 | 22 | 0 | -30 |
| 7 | 93 | 5 | 1.3 | 0.7 | 8 | 9 | 25 | 1 | -33 |

From results as illustrated in Table 1, the number of pinholes for sample Nos. 1 to 3 and 5 to 7 was 9 or less whereas the number of pinholes for sample No. 4 was 14. Accordingly, it was found that manganese was not present as manganese oxide that readily caused grain detachment and was incorporated into a cobalt aluminate crystal to provide a solid solution, so that a pinhole was difficult to generate in processing thereof.

Furthermore, among sample Nos. 1 to 3 and 5 to 7, for sample Nos. 2, 3, 5, and 6, a lightness index L* was 7 or greater and 22 or less, a chromaticness index a* was -13 or greater and 0 or less, and a chromaticness index b* was -30 or greater and -10 or less, so that a color tone of a dark blue color with depth was presented. Accordingly, it was found that, if a surface area occupancy of a solid solution crystal was 1.5% by surface area or greater and 7.5% by surface area or less, a possibility of grain detachment was low in use thereof, so that it withstood use thereof over a long period of time and presented a color tone of a dark blue color with depth.

Practical Example 2

Next, samples where crystal grain sizes of solid solution crystals were different were fabricated and confirmation of the number of pinholes was executed.

Additionally, a fabrication method for sample Nos. 8 to 14 was similar to a fabrication method for sample No. 5 in Practical Example 1 except that a firing temperature was a temperature as illustrated in Table 2. Additionally, sample No. 14 was a sample that was identical to sample No. 5 in Practical Example 1.

Then, an average crystal grain size of a solid solution crystal and a maximum value of a crystal grain size of the solid solution crystal in each obtained sample were obtained by applying a technique of particle analysis of image analysis software "A zo-kun" thereto to execute image analysis, similarly to when a surface area occupancy of a solid solution crystal in Practical Example 1 was obtained.

Furthermore, confirmation of the number of pinholes was executed by a method that was identical to that of Practical Example 1. Results are illustrated in Table 2.

Table 2

| Sample No. | Firing temperature (°C) | Average crystal grain size ($\mu$m) | Maximum value of crystal grain size ($\mu$m) | Number of pinholes (number) |
|---|---|---|---|---|
| 8 | 1450 | 0.3 | 0.4 | 2 |
| 9 | 1480 | 0.4 | 0.6 | 2 |

(continued)

| Sample No. | Firing temperature (°C) | Average crystal grain size (μm) | Maximum value of crystal grain size (μm) | Number of pinholes (number) |
|---|---|---|---|---|
| 10 | 1500 | 0.5 | 0.8 | 3 |
| 11 | 1520 | 0.6 | 1.2 | 3 |
| 12 | 1540 | 0.7 | 1.3 | 5 |
| 13 | 1560 | 0.8 | 1.5 | 5 |
| 14 | 1580 | 0.9 | 2 | 7 |

From results as illustrated in able 2, for sample Nos. 8 to 13, the number of pinholes was 5 or less that was small. Accordingly, it was found that, for a color ceramic where an average crystal grain size of a solid solution crystal was 0.8 μm or less, generation of a pinhole in processing thereof was further suppressed.

Furthermore, among sample Nos. 8 to 13, for sample Nos. 8 to 11, the number of pinholes was 3 or less that was smaller. Accordingly, it was found that, for a color ceramic where a maximum value of a crystal grain size of a solid solution crystal was 1.2 μm or less, generation of a pinhole in processing thereof was further suppressed.

Practical Example 3

Next, samples where average values of a distance between centers of gravity of adjacent solid solution crystals were different were fabricated and confirmation of the number of pinholes was executed.

Additionally, a fabrication method for sample Nos. 15 to 19 was similar to a fabrication method for sample No. 10 in Practical Example 2 except that an amount of a dispersant to be added was a value as illustrated in Table 3. Additionally, sample No. 19 was a sample that was identical to sample No. 10 in Practical Example 2.

Then, an average value of a distance between centers of gravity of adjacent solid solution crystals in each obtained sample was obtained by applying a technique of a distance-between-centers-of-gravity method of image analysis software "A zo-kun" thereto to execute image analysis, similarly to when a surface area occupancy of a solid solution crystal in Practical Example 1 was obtained.

Furthermore, for a color variation of each obtained sample, measurement was executed at 5 locations on a surface of each sample and measurement of values of L*, a*, and b* in CIE 1976 L*a*b* color space was executed, so that minimum values of L*, a*, and b* were subtracted from maximum values of obtained L*, a*, and b*, respectively, so as to calculate $\Delta L$, $\Delta a$, and $\Delta b$, and a color variation $\Delta E$ was obtained according to $\Delta E = ((\Delta L^*)^2 + (\Delta a^*)^2 + (\Delta b^*)^2)^{1/2}$. Results are illustrated in Table 3.

Table 3

| Sample No. | Dispersant (parts by mass) | Average value of distance between centers of gravity (μm) | $\Delta E$ |
|---|---|---|---|
| 15 | 0.7 | 1.3 | 1.2 |
| 16 | 0.5 | 1.5 | 0.9 |
| 17 | 0.3 | 2.5 | 0.7 |
| 18 | 0.2 | 4 | 0.9 |
| 19 | 0.1 | 5 | 1.2 |

From results as illustrated in Table 3, for sample Nos. 16 to 18, a color variation $\Delta E$ was 0.9 or less. Accordingly, it was found that, if an average value of a distance between centers of gravity of adjacent solid solution crystals was 1.5 μm or greater and 4 μm or less, a color variation was suppressed.

Practical Example 4

Next, samples where standard deviations of a distance between centers of gravity of adjacent solid solution crystals were different were fabricated and confirmation of the number of pinholes was executed.

Additionally, a fabrication method for sample Nos. 20 to 22 was similar to a fabrication method for sample No.

17 in Practical Example 3 except that preliminary grinding of an alumina powder, a cobalt oxide powder, and a manganese oxide powder was executed for a period of time as illustrated in Table 4. Additionally, sample No. 22 was a sample that was identical to sample No. 17 in Practical Example 3.

Then, a standard deviation of a distance between centers of gravity of adjacent solid solution crystals in each obtained sample was obtained by applying a technique of a distance-between-centers-of-gravity method of image analysis software "A zo-kun" thereto to execute image analysis, similarly to when a surface area occupancy of a solid solution crystal in Practical Example 1 was obtained.

Furthermore, a color variation ΔE of each obtained sample was obtained by a method that was identical to that of Practical Example 3. Results are illustrated in Table 4.

Table 4

| Sample No. | Preliminary grinding (hours) | Standard deviation of distance between centers of gravity (μm) | ΔE |
|---|---|---|---|
| 20 | 60 | 0.7 | 0.2 |
| 21 | 40 | 1.5 | 0.3 |
| 22 | 0 | 2 | 0.7 |

From results as illustrated in Table 4, for sample Nos. 20 and 21, a color variation ΔE was 0.3 or less. Accordingly, it was found that, if a standard deviation of a distance between centers of gravity of adjacent solid solution crystals was 1.5 μm or less, a color variation was suppressed.

Practical Example 5

Next, samples where rates of a monoclinic crystal of a zirconia crystal on a surface and in an interior were different were fabricated and a 3-point flexural strength was measured to execute an evaluation.

Additionally, a fabrication method for sample Nos. 24 and 31 was similar to a fabrication method for sample No. 20 in Practical Example 4 except that, after firing, barrel polishing was executed by using a triangular medium for polishing until a rate of a monoclinic crystal of a zirconia crystal on a surface thereof was a value as illustrated in Table 5. Furthermore, a fabrication method for sample Nos. 25 to 30 was similar to a fabrication method for sample No. 20 in Practical Example 4 except that, after firing, barrel polishing was executed by using a spherical medium for polishing until a rate of a monoclinic crystal of a zirconia crystal on a surface thereof was a value as illustrated in Table 5. Furthermore, Table 5 illustrates a sample that was fabricated by a fabrication method similar to that of sample No. 20 in Practical Example 4, as sample No. 23, for comparison.

Additionally, each sample was fabricated so as not to have a cylindrical shape with a diameter of 28 mm and a thickness of 3 mm but so as to have a prismatic shape with a width of 4 mm, a thickness of 3 mm, and a length of 30 mm.

Then, measurement of each of a surface and an interior of each sample was executed by an XRD and rates of a monoclinic crystal of a zirconia crystal on a surface and in an interior (a part at a depth of 1.0 mm from the surface) of each obtained sample were obtained from obtained X-ray diffraction intensities according to a following calculation formula.

$$\text{A rate of a monoclinic crystal (\%)} = (Im1 + Im2) / (Im1 + Im2 + It + Ic)$$

It: an X-ray diffraction intensity of a (1 1 1) plane of a tetragonal crystal
Ic: an X-ray diffraction intensity of a (1 1 1) plane of a cubic crystal
Im1: an X-ray diffraction intensity of a (1 1 1) plane of a monoclinic crystal
Im2: an X-ray diffraction intensity of a (1 1 -1) plane of a monoclinic crystal

Furthermore, 3-point flexural strength of each obtained sample was measured in conformity with JIS R 1601-2008. Results are illustrated in Table 5.

Table 5

| Sample No. | Rate of monoclinic crystal (%) | | Surface / Interior | 3-point flexural strength (MPa) |
|---|---|---|---|---|
| | Surface | Interior | | |
| 23 | 0.1 | 0.1 | 1 | 850 |
| 24 | 0.2 | 0.1 | 2 | 900 |
| 25 | 0.3 | 0.1 | 3 | 1000 |
| 26 | 2 | 0.5 | 4 | 1150 |
| 27 | 5 | 1 | 5 | 1250 |
| 28 | 10 | 1.5 | 6.7 | 1300 |
| 29 | 15 | 2 | 7.5 | 1250 |
| 30 | 30 | 3 | 10 | 1000 |
| 31 | 35 | 3.3 | 10.6 | 900 |

From results as illustrated in Table 5, for sample Nos. 24 to 31, a 3-point flexural strength was 900 MPa or greater. Accordingly, it was found that, if a rate of a monoclinic crystal of a zirconia crystal on a surface thereof was greater than a rate of a monoclinic crystal of a zirconia crystal in an interior thereof, a mechanical strength was improved.
Furthermore, among sample Nos. 24 to 31, for sample Nos. 25 to 30, a 3-point flexural strength was 1000 MPa or greater. Accordingly, it was found that, if a rate of a monoclinic crystal of a zirconia crystal on a surface thereof was 3 or more times and 10 or less times greater than a rate of a monoclinic crystal of a zirconia crystal in an interior thereof, a mechanical strength was further improved.

## Claims

1. A color ceramic, wherein a content of zirconia that includes a stabilizer is 80% by mass or greater, and a zirconia crystal and a solid solution crystal where manganese is incorporated into a cobalt aluminate crystal to provide a solid solution are contained therein, and wherein no grain of manganese oxide is contained therein and a dark blue color is presented where, in CIE 1976 L*a*b* color space, a lightness index L* is 5 or greater and 25 or less, a chromaticness index a* is -20 or greater and 10 or less, and a chromaticness index b* is -40 or greater and -5 or less.

2. The color ceramic according to claim 1, wherein a surface area occupancy of the solid solution crystal in a cross section thereof is 1.5% by surface area or greater and 7.5% by surface area or less.

3. The color ceramic according to claim 1 or claim 2, wherein an average crystal grain size of the solid solution crystal is 0.8 $\mu$m or less.

4. The color ceramic according to any of claim 1 to claim 3, wherein a maximum value of a crystal grain size of the solid solution crystal is 1.2 $\mu$m or less.

5. The color ceramic according to any of claim 1 to claim 4, wherein an average value of a distance between centers of gravity of the solid solution crystals that are adjacent is 1.5 $\mu$m or greater and 4 $\mu$m or less.

6. The color ceramic according to claim 5, wherein a standard deviation of a distance between centers of gravity of the solid solution crystals that are adjacent is 1.5 $\mu$m or less.

7. The color ceramic according to any of claim 1 to claim 6, wherein a rate of a monoclinic crystal of the zirconia crystal on a surface thereof is greater than a rate of a monoclinic crystal of the zirconia crystal in an interior thereof.

8. The color ceramic according to claim 7, wherein a rate of a monoclinic crystal of the zirconia crystal on the surface thereof is 3 or more times and 10 or less times greater than a rate of a monoclinic crystal of the zirconia crystal in the interior thereof.

**Patentansprüche**

1. Farbkeramik, wobei ein Gehalt an Zirkonoxid, das einen Stabilisator enthält, 80 Masse-% oder mehr beträgt, und wobei ein Zirkonoxidkristall und ein Mischkristall, in dem Mangan in einem Kobaltaluminatkristall enthalten ist, um eine Feststofflösung bereitzustellen, darin enthalten sind, und wobei kein Manganoxidkorn darin enthalten ist und eine dunkelblaue Farbe dargestellt wird, wobei im CIE 1976 L*a*b*-Farbraum ein Helligkeitsindex L* 5 oder größer und 25 oder kleiner ist, ein Chromatizitätsindex a* -20 oder größer und 10 oder kleiner ist, und ein Chromatizitätsindex b* -40 oder größer und -5 oder kleiner ist.

2. Farbkeramik gemäß Anspruch 1, wobei eine Oberflächenbelegung des Mischkristalls in einem Querschnitt davon 1,5 Flächen-% oder mehr und 7,5 Flächen-% oder weniger beträgt.

3. Farbkeramik gemäß Anspruch 1 oder Anspruch 2, wobei eine durchschnittliche Kristallkorngröße des Mischkristalls 0,8 $\mu$m oder weniger beträgt.

4. Farbkeramik gemäß irgendeinem von Anspruch 1 bis Anspruch 3, wobei ein Maximalwert einer Kristallkorngröße des Mischkristalls 1,2 $\mu$m oder weniger beträgt.

5. Farbkeramik gemäß irgendeinem von Anspruch 1 bis Anspruch 4, wobei ein Durchschnittswert eines Abstands zwischen Schwerpunkten der Mischkristalle, die benachbart sind, 1,5 $\mu$m oder mehr und 4 $\mu$m oder weniger beträgt.

6. Farbkeramik gemäß Anspruch 5, wobei eine Standardabweichung eines Abstands zwischen Schwerpunkten der Mischkristalle, die benachbart sind, 1,5 $\mu$m oder weniger beträgt.

7. Farbkeramik gemäß irgendeinem von Anspruch 1 bis Anspruch 6, wobei ein Verhältnis eines monoklinen Kristalls des Zirkonoxidkristalls auf einer Fläche davon größer als ein Verhältnis eines monoklinen Kristalls des Zirkonoxidkristalls in einem Inneren davon ist.

8. Farbkeramik gemäß Anspruch 7, wobei ein Verhältnis eines monoklinen Kristalls des Zirkonoxidkristalls auf der Fläche davon 3 oder mehr Mal und 10 oder weniger Mal größer als ein Verhältnis eines monoklinen Kristalls des Zirkonoxidkristalls im Inneren davon ist.

**Revendications**

1. Céramique de couleur, dans laquelle une teneur en zircone comprenant un stabilisateur est de 80 % en masse ou plus, et un cristal de zircone et un cristal de solution solide où du manganèse est incorporé dans un cristal d'aluminate de cobalt afin de fournir une solution solide sont contenus dans celle-ci, et dans laquelle aucun grain d'oxyde de manganèse n'est contenu dans celle-ci et une couleur bleu foncé est présentée où, dans l'espace colorimétrique L*a*b* de la CIE 1976, un indice de luminosité L* est de 5 ou plus et de 25 ou moins, un indice de chromaticité a* est de -20 ou plus et de 10 ou moins, et un indice de chromaticité b* est de -40 ou plus et de -5 ou moins.

2. Céramique de couleur selon la revendication 1, dans laquelle une occupation de surface du cristal de solution solide dans une section transversale de celle-ci est de 1,5 % en surface ou plus et de 7,5 % en surface ou moins.

3. Céramique de couleur selon la revendication 1 ou la revendication 2, dans laquelle une taille moyenne de grain de cristal de la solution solide est de 0,8 $\mu$m ou moins.

4. Céramique de couleur selon l'une quelconque de la revendication 1 à la revendication 3, dans laquelle une valeur maximale d'une taille de grain de cristal du cristal de solution solide est de 1,2 $\mu$m ou moins.

5. Céramique de couleur selon l'une quelconque de la revendication 1 à la revendication 4, dans laquelle une valeur moyenne d'une distance entre des centres de gravité des cristaux de solution solide qui sont adjacents est de 1,5 $\mu$m ou plus et de 4 $\mu$m ou moins.

6. Céramique de couleur selon la revendication 5, dans laquelle un écart type d'une distance entre des centres de gravité des cristaux de solution solide qui sont adjacents est de 1,5 $\mu$m ou moins.

7. Céramique de couleur selon l'une quelconque de la revendication 1 à la revendication 6, dans laquelle un taux d'un cristal monoclinique du cristal de zircone sur une surface de celle-ci est supérieur à un taux d'un cristal monoclinique du cristal de zircone dans un intérieur de celle-ci.

8. Céramique de couleur selon la revendication 7, dans laquelle un taux d'un cristal monoclinique du cristal de zircone sur la surface de celle-ci est 3 fois ou plus et 10 fois ou moins supérieur à un taux d'un cristal monoclinique du cristal de zircone dans un intérieur de celle-ci.

**EP 3 647 297 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016216289 A

- JP H0238363 B